# EUROPEAN PATENT APPLICATION

(11) **EP 2 918 539 A1**
(43) Date of publication of application: **16.09.2015**
(21) Application number: 15158184.0
(22) Date of filing: 09.03.2015
(51) Int. Cl.: B66C 1/12, F16L 57/06, D04B 1/22, D07B 1/02, D02G 3/12, D02G 3/44

(54) **Protective cloth**

(30) Priority: 14.03.2014 NL 2012441
(71) Applicant: Calboo Holding B.V., 3893 CV Zeewolde (NL)
(72) Inventor: Calboo, Luuk Dhr., 3893 CV Zeewolde (NL)
(74) Representative: Klavers, Cornelis

(57) **Abstract**

A knitted fabric knitted with a yarn (4) comprising high performance fibres or filaments (1), in particular UHMWPE filaments, and a steel wire (2). The fabric can be used as a protective cover (10) for a round sling (12). The protective cover (10) may be surrounded by an auxiliary cover (11), which is also made from a circular knitted fabric.

## Description

### BACKGROUND OF THE INVENTION

The invention relates to cloth for protecting objects against wear and/or damage. Such objects include, for example, cables and slings, in particular cables and slings for hoisting operations performed in handling objects, such as loading and unloading and, for example, the placing of parts of superstructures of offshore platforms and parts of windmills, such as vanes.

Such elongated objects are used under very heavy conditions, caused not only by tensile, abrasive, cutting and shock forces, but also by environmental influences, such as salt, sand and metal particles, such as grinding dust. In view of the possible consequences in case of fracture of said elongated objects, the applicable safety factor is high, i.e., in general the safety factor for textile hoisting means is seven in Europe.

For hoisting work use is often made of so-termed round slings, i.e., slings of an elongated, circular or endless object, which, in operation, extends in a straight line with two parallel, straight halves. Generally, a plurality of round slings are hooked up, at the upper end thereof, to a hoisting hook and, at the lower end, they are attached to a hoisting belt by means of a (bow)shackle, which hoisting belt is provided around/underneath the object to be hoisted. In the European Union, standard NEN 1492-2 applies to round slings.

Said round slings can be made from a synthetic resin, and the strength is dependent upon the intended use. For heavy-duty applications use is made, for example, of an elongated object whose core consists of HPPE (HMPE) yarn which is surrounded by a protective cover of a HPPE (HMPE) fabric.

In the process of manufacturing a woven fabric from HPPE filament yarns, the filaments may break upon sharp reversal of the movement. As a result, HPPE filament yarns can suitably be used as warp thread, but are less suitable for use as weft thread. In addition, in a weaving process the selected width forms a limiting factor, since it is determined by the length of the series of shuttles or the beam. A further drawback resides in that, in the weaving process, due to said series of shuttles, a large stock of material is present, as a result of which, when a fabric is ready and hence the weaving process is ended, it is not readily possible, or not possible without loss of material, to start making a fabric of a different size or type.

A further point of attention is that woven fabrics are comparatively inelastic in their main plane. The puncture resistance and tear resistance can be adversely affected because the warp threads can locally move apart quite easily.

### SUMMARY OF THE INVENTION

It is an object of the invention to provide cloth which can suitably be used to protect elongated elements, such as cables, belts and round slings, which are used under heavy-duty conditions (forces and/or environmental influences).

Another object of the invention is to provide cloth which is an improvement over, or a useful alternative to, existing woven cloths used to protect elongated elements, such as cables, belts and round slings, which are used under heavy-duty conditions (forces and/or environmental influences).

To achieve at least one of said objects, the invention provides, from one aspect, cloth which has the characteristics of claim 1.

In the manufacture of a knitted fabric, the yarns are less subject to sharp bending loads, so that the high performance fibres/filaments in the yarns are less susceptible to plastic deformation, in particular buckling. As a result, there is increased freedom as to the choice of material and the implementation thereof.

A further advantage resides in that it is readily possible to change over to a next, different knitted fabric, because the necessary stock of yarn can be limited. Knitting furthermore enables the width to be achieved to be set in a simple manner in a knitting machine, which also provides increased freedom as to the implementation.

It is advantageous for the strength/resistance properties that, in a knitted fabric, an impacted yarn can yield by virtue of the loop shape in the knitted fabric. The abrasive strength is enhanced by the pattern design in the knitted fabric.

High performance fibres/filaments are to be understood to include synthetic (polymer) fibres/filaments having a tenacity in excess of 20 cN/dTex, preferably in excess of 30 cN/dTex, and an elongation at break of less than 5%, measured according to ASTM D885M. Examples include fibres/filaments of aromatic polyamide, such as aramides commercially available under the trade names Twaron®, Kevlar®, Technora®, aromatic polyesters, for example, commercially available under the trade name Vectran®, polybisoxazol, for example, commercially available under the trade name Zylon®, or fibres/filaments of UHMWPE, alternatively referred to as HPPE or HMPE, which are, for example, commercially available under the trade names Dyneema® or Spectra®. The yarns made from these fibres/filaments can be considered to be inelastic. The elongation at break of these yarns can be less than 5%.

In an embodiment, the high performance fibres or filaments are made from a HPPE material referred to as Dyneema®, which material results in comparatively very inelastic yarns having a comparatively small elongation at break. Examples include SK62, SK75, SK78, SK90, and DM20.

The knitted fabric may be a tricot knitted fabric with, for example, 1x1 ribs or 2x2 ribs. In an embodiment intended for heavy-duty use, the knitted fabric is a double knitted fabric, preferably an interlock knitted fabric.

In particular a double knitted fabric allows much variation to optimize the cloth as a function of the intended use. For example, the knitted fabric can be made from two or more yarns of different composition, such as yarns composed of different types or numbers of high performance filaments and/or mixtures.

In an embodiment, the yarn comprises high performance monofilaments, for example twisted monofilaments. The yarn used may consist entirely of said (twisted) monofilaments.

In an embodiment, if a further increased resistance to wear and/or cutting resistance are required, the yarn may additionally comprise a stainless steel wire (INOX), which is preferably twisted together with high performance monofilaments. For example, in said double knitted fabric, one yarn may be made exclusively from HPPE monofilaments and the other yarn may be made from a twisted combination of HPPE monofilaments and stainless steel wire.

The knitted fabric may be obtained by flat knitting.

In the case of protection of an elongated element, it may be advantageous to make the cloth by circular knitting. This enables a cover or sleeve without a longitudinal seam to be obtained.

Viewed from a further aspect, the invention provides an elongated protective cover made from cloth according to the invention. In the case of a rib tricot, the ribs of the knitted fabric may be oriented in the longitudinal direction, which may be advantageous in the case of linear displacement of an element protected by the cover, since the surface of the cover is more even in said direction.

Viewed from a further aspect, the invention enables the cloth to be used in an elongated object which is surrounded on the outside by a cover according to the invention. Said elongated object may be in the form of a transmission line, such as a tube, pipe, hose or cable. In particular, the elongated object may be in the form of an elongated tensile element, such as a rope, cable.

A cover made from a fabric of high performance fibres can be inelastic as a whole and surround the core of a round sling with a comparatively ample amount of clearance if the cover is manufactured as a sleeve. This applies in particular when the cover is slipped onto a mandrel or tooling while the core is being produced from the mandrel. The diameter of the mandrel is larger than that of the core. In the case of a knitted fabric, however, use can be made of the elasticity in the circumferential direction, so that the sleeve/cover, after it has been removed from the mandrel, has a smaller circumference and can be a narrow fit or a tight fit on the core. For this purpose, in accordance with a further aspect of the invention, there is provided an elongated object, such as a round sling, and the said cover is a circular knitted fabric which is a narrow, preferably tight, fit around the core. By virtue thereof, wear is limited. In addition, the diameter of the object, for example a sling, is as small as possible, leading to improved ease of handling.

The elongated object can be expanded by surrounding it with an auxiliary cover surrounding the said protective cover and also being made from cloth according to the invention. Said auxiliary cover and the underlying protective cover can be used as an indicator, for example by using different colours for the auxiliary cover and the protective cover, indicating that the auxiliary cover has been exposed to (excessively) heavy loads or has been damaged. The condition of the auxiliary cover, indicated by the protective cover which is visible through the auxiliary cover, is an indication of whether steps have to be taken to avoid further damage to the auxiliary cover or to avoid damage to the protective cover. The strength of the auxiliary cover may be less than that of the protective cover, and may be a single knitted fabric, in particular a rib tricot. Preferably, also the auxiliary cover is made by circular knitting, and it surrounds the protective cover preferably in a close-fitting manner. The ribs preferably extend in the longitudinal direction of the cover.

The elongated object, in particular a cover with or without auxiliary cover, can be expanded by means of small covers made from cloth according to the invention, which are locally provided at locations where high local loads are likely, such as locations which come into contact with a hoisting means such as a hoisting hook. These small covers offer additional protection. They can be detachably attached to the cover or auxiliary cover, for example by means of hook-and-loop fastening.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub-claims.

### SHORT DESCRIPTION OF THE DRAWINGS

The invention will be elucidated on the basis of an exemplary embodiment shown in the attached drawings, in which:
Figure 1 diagrammatically shows filaments for use in the manufacture of a cover according to the invention;
Figure 2 diagrammatically shows yarns of filaments according to figure 1;
Figures 3A and 3B show, respectively, a diagrammatic front view and a diagrammatic sectional view of a double knitted fabric of the yarns according to figure 2;
Figure 4 shows a view of a protective cover made from double knitted fabric according to figures 3A,B;
Figure 5 shows a view of an auxiliary cover made from a single knitted fabric of yarns according to figure 2;
Figures 6A and 6B show, respectively, a diagrammatic, partly cut-away view of a round sling with covers according to figures 4 and 5, and said round sling in a flat, straight state; and
Figure 7 shows an example of the round sling according to figures 6A, B during use.

### DETAILED DESCRIPTION OF THE DRAWINGS

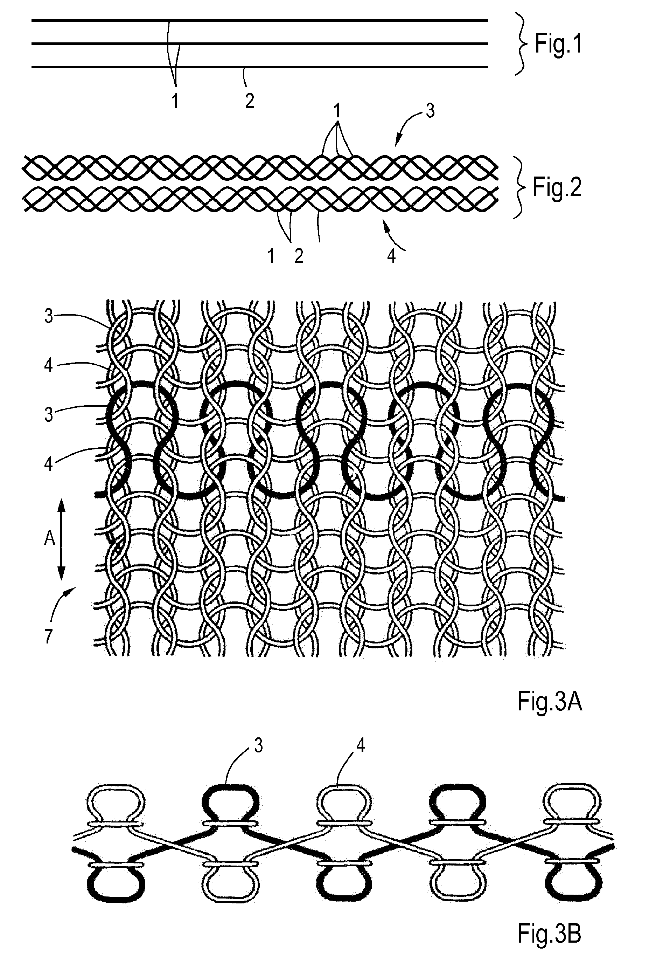

The filaments 1 in figure 1 are high performance monofilaments. In this example, they are made from a HPPE, for example Dyneema SK75. They have a thickness of, for example, 1760 Dtex.

In figure 2, an INOX wire 2 is additionally shown, which has a thickness of, for example, 0.07 mm or 0.05 mm or 0.035 mm.

To obtain yarns for use in the knitted fabric according to the invention, the filaments 1 are twisted, for example seven monofilaments per yarn. In this manner a yarn 3 is obtained, which is exclusively composed of twisted monofilaments 1. Furthermore, in this example, a yarn 4 is made which is obtained by twisting together a number of monofilaments 1 and one or more INOX wires 2.

In a knitting machine, not shown here, a double knitted fabric, an interlock of, for example, two 1x1 rib tricots, is made from the yarns 3 and 4. Two 2x2 rib tricots is also possible, or another combination of rib tricots. In figures 3A and 3B, the structure of the double knitted fabric 7 is diagrammatically shown, comprising alternating yarns 3 and 4. The rib direction is A.

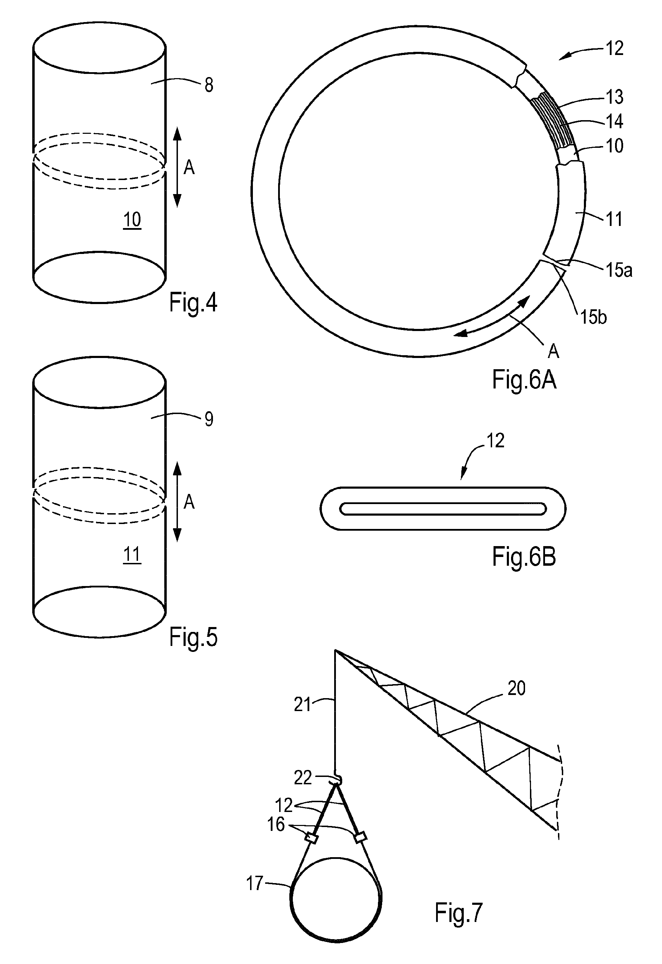

When the knitting is complete, the knitted fabric 7 will form a cloth 8, which is shown as a circular knitted cloth in figure 4, so that a protective cover 10 without a longitudinal seam is obtained.

The cover 10 can be used as a protective cover for the core of a round sling used for hoisting activities, in particular in the offshore industry. An example of such a round sling, here round sling 12, is diagrammatically shown in figures 6A and 6B. The core 14 is built up of a single yarn 13 of monofilaments of the same synthetic resin material as the monofilaments 1. The thickness and the number of monofilaments in yarn 13 may be different than in yarn 3. The core is produced by coiling or, in other words, winding the single yarn 13 many times. In this manner, the windings of the yarn 13 are parallel; there are no braided or twisted yarns. The yarns can be supplied from a dispensing and feed-through mandrel or head, on which the protective cover 10 is provided in a telescoped-together and circumferentially stretched state. The yarn 13 is fed through the head, and hence through the cover, time after time until the core has the required number of yarn windings. Next, the two ends of the yarn 13 are interconnected. The cover 10 is slid from the head, resulting in a reduction of the circumferential dimension thereof, such that the cover 10 tightly fits around the core 14. The ends 15a,b of the cover 10 are also attached to one another. At this stage, the round sling 12 can be stored in a flat state, as shown in figure 6B, and provided, for example, with a bow shackle, which is not shown. The rib direction A of the knitted fabric of the cover 10 is parallel to the direction of winding of the round sling 12.

An auxiliary cover 11 can be provided around the cover 10. This auxiliary cover 11 (see figure 5) may be manufactured as a cloth 9 from yarns 3 which are the same as those used for cloth 8, but different in colour. Alternatively, however, the knitted fabric may be a simpler, single knitted fabric, such as a flat tricot 1x1 rib. The rib direction of the knitted fabric of the cloth 9 is parallel to the longitudinal centre line of the auxiliary cover 11. The diameter of the auxiliary cover 11 corresponds to that of the cover 10. The elasticity of the cloth 9 also makes it possible, during the manufacture of the core 14, to provide the auxiliary cover 11 on the abovementioned head, around the cover 10. After completion of the core 14, both covers can then be slid from the head and fully cover the round sling 12 in the same manner.

In figure 7, part of a crane jib 20 of a hoisting apparatus is shown, comprising a downward extending hoisting chain 21 having a hoisting hook 22 at the end thereof. Four round slings 12 are placed, at one end thereof, on the hook 22. Two hoisting belts 17 are attached, through bow shackles 16, to the bottom end of the stretched round slings 12. Said hoisting belts support an object to be moved, such as a roll of steel plate or a tube.

Not shown are: additional small protective covers of a knitted fabric according to the invention, which can offer additional protection to a round sling according to the invention at the location of the hoisting points, such as at the location of the abovementioned hook.

The above description is included to illustrate the operation of preferred embodiments of the invention, and is not meant to limit the scope of the invention. From the above discussion, many variations will be apparent to one skilled in the art that would yet be encompassed by the spirit and scope of the present invention.

## Claims

1. Cloth in the form of a knitted fabric which is at least partly made from a yarn of high performance fibres or filaments, which are synthetic fibres/filaments having a tenacity in excess of 20 cN/dTex, preferably in excess of 30 cN/dTex, and an elongation at break of less than 5%, measured according to ASTM D885M, wherein said yarn additionally comprises a steel wire.

2. Cloth according to claim 1, wherein the knitted fabric is a rib tricot.

3. Cloth according to claim 1 or 2, wherein the knitted fabric is a double-knitted fabric.

4. Cloth according to claim 3, wherein the double-knitted fabric is an interlock knitted fabric.

5. Cloth according to any one of claims 1 to 4, wherein the knitted fabric is made from two different kinds of high performance fibres or filaments.

6. Cloth according to any one of the preceding claims, wherein the high performance fibres or filaments are made from HPPE.

7. Cloth according to any one of the preceding claims, wherein the yarn comprises, preferably twisted, high performance monofilaments, wherein, preferably, the yarn used consists of high-performance monofilaments.

8. Cloth according to any one of the preceding claims, wherein the steel wire is twisted together with high performance monofilaments.

9. Cloth according to claim 8 with reference to claim 3 or 4, wherein one yarn of the double knitted fabric is made exclusively from HPPE monofilaments and the other yarn is made as claimed in claim 8.

10. Cloth according to any one of the preceding claims, wherein the cloth is obtained by flat knitting.

11. Cloth according to any one of claims 1 to 10, wherein the cloth is obtained by circular knitting.

12. Cloth according to claim 11, wherein the knitted fabric is a rib tricot, and the rib direction corresponds to the longitudinal direction of the circular knitted cloth.

13. Use of the cloth according to claim 11 or 12, wherein the cloth is used to surround the outside of an elongated object.

14. Use of the cloth according to claim 13, wherein the elongated object is in the form of a transmission line, such as a tube, pipe or hose, or in the form of an elongated tensile element, such as a rope or a cable.

15. Use of the cloth according to claim 13 or 14, wherein the elongated element comprises parallel yarn windings of high performance filaments, the yarn used preferably being equal to that used for the cloth.
